# EUROPEAN PATENT SPECIFICATION

(11) **EP 2 362 960 B1**
(45) Date of publication and mention of the grant of the patent: **12.03.2014**
(21) Application number: 09742919.5
(22) Date of filing: 05.05.2009
(51) Int. Cl.: G06K 19/02, G06K 19/077

(54) **A PASSIVE TRANSPONDER AND AN ITEM WITH A PASSIVE TRANSPONDER**
PASSIVER TRANSPONDER UND OBJEKT MIT EINEM PASSIVEN TRANSPONDER
TRANSPONDEUR PASSIF ET ARTICLE COMPORTANT UN TRANSPONDEUR PASSIF

(30) Priority: 05.05.2008 US 50339 P; 05.05.2008 SE 0800991
(43) Date of publication of application: 07.09.2011
(73) Proprietor: Recco Invest Ab, 181 04 Lidingö (SE)
(72) Inventor: GRANHED, Magnus, S-181 46 Lidingö (SE); FORSSÉN, Karl-Gösta, S-175 67 Järfälla (SE)
(74) Representative: Stenborg, Anders Vilhelm
(86) International application number: PCT/SE2009/000227
(87) International publication number: WO 2009/136837

(56) References cited:
- WO-A-00/48019
- WO-A-2005/067042
- WO-A-2008/024921
- US-A- 5 465 099

## Description

### Technical field

The invention relates to a passive transponder adapted to be embedded in fabrics. The present invention also relates to an item, for example an absorbent fabric for medical purposes, provided with at least one passive transponder adapted to be attached to, embedded in or integrated into the item.

### Background to the invention

Absorbent fabrics are normally used to stop internal bleeding for instance during surgery in hospitals, and there is a potential risk that the absorbent fabrics are left inside a patient's body after surgery is completed, which may cause the patient to be sick, or even die, from this mistake. Thus, there is a need to determine if the absorbent fabrics have been removed after surgery, and preferably before the wound is closed by stitches.

A way to determine if the absorbent fabrics have been removed is to keep track of how many pieces of absorbent fabric have been put into the patient, and then count how many that has been removed. This is very impractical and a solution that may verify that all have been removed is more desirable.

A solution to this problem is to use any type of transmitting antennas, such as disclosed in US2006/0161225, by Sormann et al. and US2005/0095197, by Tuszynski et al., embedded in absorbent fabrics, since it is easy to detect any absorbent fabric unintentionally left inside a human body after surgery. An article from "Threadless @ Virginia Tech" with the title "News and Notes for our Industrial partners" (December 12, 2006) disclose patch antennas that can be embroidered into fabric with a conductive thread.

However, it is not desirable to embed transmitting antennas into an absorbent fabric intended to be used during surgical procedures. A passive component that does not emit any signals until the detection takes place is desirable.

Passive transponders that, when hit by a RF power of a first frequency f₁, retransmit RF power of a second harmonic frequency f₂, are known from US 6,456,228. However, these are large in size and less flexible than is needed in order to be able to attach them to an arbitrarily shaped surface or embed them into a fabric.

US 5,465,099 which forms the preamble of claim 1, relates to a detectable device comprising a dipole antenna, a diode connected in parallel to feed points of the dipole antenna, and a loop antenna whose feed points are in parallel to the feed points of the diode for converting electrical current having a harmonic frequency to radio waves.

WO 2008/024921 A2 relates to a surgical sponge with an integrated RFID transponder.

WO 2005/067042 A1 relates to a method of electrically connecting an electrical conductor to an electrical component inside a textile.

Therefore, there is a need to provide a new type of passive transponders.

### Summary of the invention

An object with the present invention is to provide passive transponders that are smaller and more flexible than prior art passive transponders.

The object is achieved by a passive transponder according to claim 1. Said transponder comprises an antenna having two electrically conductive parts, a diode connected between the electrically conductive parts, and a transmission line connected to the antenna and to the diode. The transmission line is adapted to match the impedance of the diode to an impedance of the antenna, wherein the passive transponder, when hit by RF power of a first frequency *f*₁, retransmits RF power of a harmonic frequency n-f₁, (n=2,3,4, ...). The electrically conductive material of the antenna and the transmission line is a flexible material which may be folded without damaging the electrical properties of the material and jeopardizing the function of the passive transponder. Each electrical conductive part of the antenna is in the form of at least one flexible, electrically conductive, thread.

A second object with the present invention is to provide an item having a surface, adapted to be secured to an article with an arbitrary shape, to which surface a passive transponder may be attached to, or embedded in.

The second object is achieved by an item provided with at least one passive transponder with deformable properties attached to, or embedded in, the surface.

An object with a preferred embodiment is to provide a fabric which may be detected by a detector when the fabric is immersed in an electrically conductive environment, such as a human body.

This object is achieved by a fabric provided with at least one passive transponder embedded in or integrated into the fabric.

An advantage with the present invention is that the passive transponder is not including a power source and thus not transmitting RF power until a detector activates the passive transponder by transmitting RF power of the correct frequency.

Another advantage with the present invention is that RF power of a harmonic second frequency will be detected by the detector only if a passive transponder is present in the area under investigation.

A further advantage with the present invention is that the item (or fabric) may be handled in any way (by folding, crumple up, etc.) without jeopardizing the function of the passive transponder due to the flexible design.

Further objects and advantages will be apparent for a skilled person from the detailed description and the drawings.

### Brief description of the drawings

Fig. 1 shows a first embodiment of a passive transponder according to the present invention.
Fig. 2 shows a second embodiment of a passive transponder according to the present invention.
Fig. 3 shows a third embodiment of a passive transponder according to the present invention.
Fig. 4 shows a first embodiment of an item according to the present invention with embedded passive transponders.
Fig. 5 shows a second embodiment of an item according to the present invention with integrated passive transponders.
Fig. 6 shows a third embodiment of an item according to the present invention with passive transponders attached to its surface.

### Detailed description of the preferred embodiments

Passive transponders preferably need to be adapted to a desired receiving frequency and a transmitting frequency, which normally is twice as high as the receiving frequency, but any harmonic frequency will be sufficient for the passive transponder to work properly. The procedure to adapt the passive transponders has been described in US 6,456,228.

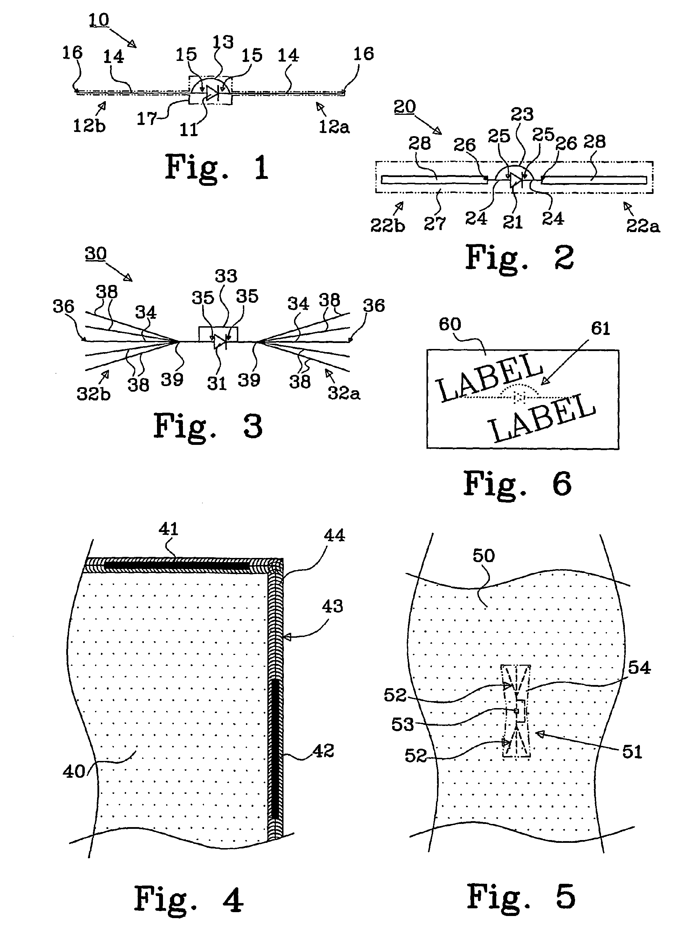

Figure 1 shows a first embodiment of a passive transponder 10 comprising a diode 11, an antenna having two electrically conductive parts 12a and 12b, and a transmission line 13. Each electrically conductive part 12a, 12b of the antenna comprises in this embodiment an elongated thread 14 (or wire) having a first end 15 and a second end 16. The diode 11 is electrically connected between the first ends 15 of the elongated threads 14, and the transmission line 13, preferably implemented as a flexible thread, is adapted to match the impedance of the diode 11 to an impedance of the antenna by arranging the transmission line between the two electrically conductive parts 12a and 12b of the antenna. A dielectric cover 17 is preferably arranged to encompass the antenna, transmission line 13 and diode 11, as indicated by the dash-dotted line in the figure, to improve the performance of the passive transponder.

Figure 2 shows a second embodiment of a passive transponder 20 comprising a diode 21, an antenna having two conductive parts 22a and 22b, and a transmission line 23. Each electrically conductive part 22a, 22b, of the antenna comprises in this embodiment a short thread 24 having a first end 25 and a second end 26, and a thin narrow foil strip 28 electrically connected to the second ends 26 of the threads 24. The diode 21 is electrically connected between the first ends 25 of the threads 24, and the transmission line 23, preferably implemented as a flexible thread, is adapted to match the impedance of the diode 21 to an impedance of the antenna by arranging the transmission line 23 between the two electrically conductive parts 22a and 22b of the antenna. A dielectric cover 27 is preferably arranged to encompass the antenna, transmission line 23 and diode 21, as indicated by the dash-dotted line in the figure, to improve the performance of the passive transponder.

Figure 3 shows a third embodiment of a passive transponder 30 comprising a diode 31, an antenna having two conductive parts 32a and 32b, and a transmission line 33. Each electrically conductive part 32a, 32b, of the antenna comprises in this embodiment an elongated thread 34 having a first end 35 and a second end 36; and at least one additional thread, in this embodiment four additional threads 38, electrically connected to a point 39 on the elongated thread 34 situated between the first end 35 and the second end 36 of each thread 34. The diode 31 is electrically connected between the first ends 35 of the threads 34, and the transmission line 33, preferably implemented as a flexible thread, is adapted to match the impedance of the diode 31 to an impedance of the antenna by arranging the transmission line 33 between the two electrically conductive parts 32a and 32b of the antenna. A dielectric cover (not shown) may be arranged to encompass the antenna, transmission line 33 and diode 31, as discussed in connection with figure 5.

A passive transponder may be as small as 1 x 10 mm, but is preferably 2 x 30 mm, and enclosed in a dielectric material with a high dielectric constant, such as silicone. The essential property of the passive transponder is that a piece of conducting material is attached to each side of a diode, and a transmission line is arranged between each side of the diode. The process of adapting the passive transponder to react to RF power of a desired frequency and to retransmit RF power of a harmonic frequency is readily apparent for a skilled person from the detailed description of US 6,456,228.

The electrically conductive material of the antenna and the transmission line of the passive transponders is preferably a highly flexible material which may be folded without damaging the electrical properties of the material, e.g. insulated metal wires, or conductive threads as illustrated in connection with figure 5. It is naturally possible to replace the diode with any type of semiconductor component that has a PN junction, which is obvious for a skilled person in the art.

Furthermore, the dielectric material used to form the dielectric cover, as illustrated in figures 1 and 2, is present to reduce the influence of the surroundings of the passive transponder in a near field of the antenna.

Figure 4 shows a first embodiment of a fabric 40 having at least one passive transponder, in this embodiment two passive transponders 41 and 42 are illustrated being perpendicularly arranged to each other, embedded therein. Any of the passive transponders described in connection with figures 1-3 may be arranged at the edge 43, e.g. embedded in a hem or an edge seam 44, of the fabric 40. The passive transponders are preferably enclosed in a dielectric material, which also is a biocompatible material in order to prevent any unwanted materials in the passive transponder to come in contact with fluids and human organs when the fabric is placed within a human body. Furthermore, the fabric is preferably absorbent, and is used to absorb human body fluids, e.g. blood, during surgery.

Figure 5 shows a second embodiment of a woven, or non-woven, fabric 50 having one passive transponder 51 integrated in the fabric by using conductive threads 52 as antenna and transmission line, which are illustrated by the dashed lines, electrically connected to each other and to a diode 53. When the fabric is intended for use inside a living body of a human or animal, it is desirable to enclose the passive transponder with a dielectric, biocompatible, preferably flexible, material, such as silicone. Other suitable biocompatible materials are obvious for a skilled person in the art. The biocompatible material is preferably arranged over the passive transponder 51 by applying a liquid gel. The gel will harden when exposed to air and form a cover, i.e. the passive transponder is coated with a flexible biocompatible material 54 that will prevent contact with the conductive components of the passive transponder.

It is of course possible to fasten a pre-manufactured passive transponder, such as illustrated in any of figures 1-3, directly onto the fabric 50.

The fabric 50 may be formed into an arbitrary shape adapted for a product, e.g. a compress for absorbing fluids or a tamponade for flow stoppage of blood, used during medical treatment or surgery.

In order to be able to detect a piece of fabric, provided a passive transponder is attached to the fabric, radio frequency (RF) power of a first frequency f₁ needs to be transmitted from a detector. The transponder will then retransmit RF power of a harmonic frequency fₕ, i.e. a multiple of the first frequency f₁, wherein fₕ=n·f₁; (n=2, 3, 4,...). The retransmitted RF power of the harmonic frequency fₕ, preferably the second harmonic frequency f₂, is detected by the detector and the presence of the passive transponder is verified. If no RF power of the harmonic frequency is detected, there are no passive transponders present, and thus no fabric.

A detector, which is commercially available from Recco AB, is preferably swept over an object, such as a living body of a patient, at a close distance to detect the presence of any passive transponder. The sweeping procedure is preferably performed prior to completion of the surgical operation, but it is also possible to verify the non-presence of passive transponders after the patient has left the operating room.

Although figures 4 and 5 illustrate the use of the inventive passive transponder embedded in, or integrated in, a fabric, the invention should not be limited to this.

Figure 6 show an item 60 having flexible properties, such as an adhesive label, or a sheet of material, e.g. plastic, that may be provided with a passive transponder 61 as described in connection with figures 1-3. The passive transponders may be provided with an adhesive layer to facilitate adhesion to a non-adhesive surface of an item.

Item 60 is preferably a label (as illustrated in figure 6) provided with a passive transponder that may be attached to a larger article, such as a container with hazardous material. The surface of the article may have an arbitrary shape. The article may be detected by a detector and its location verified in order to prevent articles to be stored, or placed, in e.g. a non-permitted area.

## Claims

1. A passive transponder (10; 20; 30; 41, 42; 51) comprising:
- an antenna made from electrically conductive material having two electrically conductive parts (12a, 12b; 22a, 22b; 32a, 32b);
- a diode (11; 21; 31; 53) connected to the antenna; and
- a transmission line (13; 23; 33) connected to the antenna and to the diode, said transmission line is adapted to match the impedance of the diode to an impedance of the antenna, wherein the passive transponder, when hit by RF power of a first frequency f₁, retransmits RF power of a harmonic frequency fₕ,
**characterized in that**
the electrically conductive material of the antenna and the transmission line is a flexible material
each electrically conductive part (12a, 12b; 22a, 22b; 32a, 32b) of the antenna is in the form of at least one flexible conductive thread (14; 24; 34) having a first end (15; 25; 35) and a second end (16; 26; 36),
wherein the diode (11; 21; 31; 53) is electrically connected to the first end (15; 25; 35) of the flexible conductive thread.

2. The passive transponder according to claim 1, wherein each electrically conductive part (32a, 32b) is in the form of a first flexible conductive thread (34) having a first end (35) and a second end (36) and at least one additional flexible conductive thread (38) electrically connected to a point (39) on the first flexible conductive thread (34) situated between the first end (35) and the second end (36) of the first flexible conductive thread (34).

3. The passive transponder according to any of claims 1-2, wherein said flexible conductive threads are insulated metal wires.

4. The passive transponder according to any of claims 1-3, wherein said flexible conductive threads (52) are configured to be integrated into a fabric (50).

5. The passive transponder according to claim 4, wherein said transmission line is a conductive thread configured to be integrated into the fabric (50).

6. The passive transponder according to any of claims 1-5, wherein the harmonic frequency fₕ is twice as high as the first frequency f₁.

7. The passive transponder according to any of claims 1-6, wherein the passive transponder (10; 20; 41, 42) is enclosed in dielectric material in order to reduce influence of the surroundings of the passive transponder in a near field of the antenna.

8. The passive transponder according to claim 7, wherein said dielectric material is a biocompatible material.

9. A fabric (40; 50) including at least one passive transponder (41, 42; 51; 61) according to any of claims 1-8.

10. The fabric according to claim 9, wherein said fabric is absorbent and adapted to be used for absorbing fluids.

11. The fabric according to any of claims 9 or 10, wherein said at least one passive transponder (41, 42) is embedded in the fabric.

12. The fabric according to claim 11, wherein each passive transponder (41, 42) is arranged at the edge (43) of the fabric, preferably enclosed by a hem, or edge seam (44).

13. The fabric according to any of claims 9 or 10, wherein said at least one passive transponder (51) is integrated in the fabric, and the transmission line and the antenna of each passive transponder comprise conductive threads (52) arranged within the fabric.

14. The fabric according to any of claims 9-13, wherein said passive transponder is coated with a flexible biocompatible material (54).

15. The fabric according to any of claims 9-14, wherein said fabric is formed into the shape of a compress or a tamponade.

## Patentansprüche

1. Passiver Transponder (10; 20; 30; 41, 42; 51), umfassend:
- eine Antenne, die aus elektrisch leitfähigem Material hergestellt ist, mit zwei elektrisch leitfähigen Teilen (12a, 12b; 22a, 22b; 32a, 32b);
- eine Diode (11; 21; 31; 53), die mit der Antenne verbunden ist; und
- eine Übertragungsleitung (13; 23; 33), die mit der Antenne und mit der Diode verbunden ist, wobei die Übertragungsleitung so ausgelegt ist, dass sie die Impedanz der Diode einer Impedanz der Antenne anpasst, wobei der passive Transponder, wenn ihm HF-Energie mit einer ersten Frequenz f₁ zugeführt wird, HF-Energie mit einer harmonischen Frequenz fₕ wieder abstrahlt,
**dadurch gekennzeichnet, dass**
es sich bei dem elektrisch leitfähigen Material der Antenne und der Über-tragungsleitung um ein flexibles Material handelt,
jeder elektrisch leitfähige Teil (12a, 12b; 22a, 22b; 32a, 32b) der Antenne in Form von mindestens einem flexiblen leitfähigen Faden (14; 24; 34) mit einem ersten Ende (15; 25; 35) und einem zweiten Ende (16; 26; 36) vorliegt,
wobei die Diode (11; 21; 31; 53) elektrisch mit dem ersten Ende (15; 25; 35) des flexiblen leitfähigen Fadens verbunden ist.

2. Passiver Transponder nach Anspruch 1, wobei jeder elektrisch leitfähige Teil (32a, 32b) in Form eines ersten flexiblen leitfähigen Fadens (34) mit einem ersten Ende (35) und einem zweiten Ende (36) und mindestens eines zusätzlichen flexiblen leitfähigen Fadens (38) vorliegt, der elektrisch mit einem Punkt (39) an dem ersten flexiblen leitfähigen Faden (34) verbunden ist, der sich zwischen dem ersten Ende (35) und dem zweiten Ende (36) des ersten flexiblen leitfähigen Fadens (34) befindet.

3. Passiver Transponder nach Anspruch 1 oder 2, wobei es sich bei den flexiblen leitfähigen Fäden um isolierte Metalldrähte handelt.

4. Passiver Transponder nach einem der Ansprüche 1 bis 3, wobei die flexiblen leitfähigen Fäden (52) so eingerichtet sind, dass sie in einen Stoff (50) integriert sind.

5. Passiver Transponder nach Anspruch 4, wobei es sich bei der Übertragungsleitung um einen leitfähigen Faden handelt, der so eingerichtet ist, dass er in den Stoff (50) integriert ist.

6. Passiver Transponder nach einem der Ansprüche 1 bis 5, wobei die harmonische Frequenz fₕ zweimal so hoch wie die erste Frequenz f₁ ist.

7. Passiver Transponder nach einem der Ansprüche 1 bis 6, wobei der passive Transponder (10; 20; 41, 42) in dielektrischem Material eingeschlossen ist, um den Einfluss der Umgebung des passiven Transponders in einem Nahfeld der Antenne zu vermindern.

8. Passiver Transponder nach Anspruch 7, wobei es sich bei dem dielektrischen Material um ein biokompatibles Material handelt.

9. Stoff (40; 50), der mindestens einen passiven Transponder (41, 42; 51; 61) nach einem der Ansprüche 1 bis 8 aufweist.

10. Stoff nach Anspruch 9, wobei der Stoff saugfähig ist und so ausgelegt ist, dass er zum Aufnehmen von Flüssigkeiten ausgelegt ist.

11. Stoff nach einem der Ansprüche 9 oder 10, wobei der mindestens eine passive Transponder (41, 42) in den Stoff eingelassen ist.

12. Stoff nach Anspruch 11, wobei jeder passive Transponder (41, 42) an dem Rand (43) des Stoffs angeordnet ist, vorzugsweise umgeben von einem Saum oder einer Randnaht (44).

13. Stoff nach einem der Ansprüche 9 oder 10, wobei der mindestens eine passive Transponder (51) in den Stoff integriert ist und die Übertragungsleitung und die Antenne jedes passiven Transponders leitfähige Fäden (52) umfassen, die in dem Stoff angeordnet sind.

14. Stoff nach einem der Ansprüche 9 bis 13, wobei der passive Transponder mit einem flexiblen biokompatiblen Material (54) beschichtet ist.

15. Stoff nach einem der Ansprüche 9 bis 14, wobei der Stoff als Kompresse oder Tamponade geformt ist.

## Revendications

1. Transpondeur passif (10 ; 20 ; 30 ; 41, 42 ; 51) comprenant :
- une antenne constituée d'une matière électroconductrice présentant deux parties électroconductrices (12a, 12b ; 22a, 22b ; 32a, 32b) ;
- une diode (11 ; 21 ; 31 ; 53) reliée à l'antenne ; et
- une ligne de transmission (13 ; 23 ; 33) reliée à l'antenne et à la diode, ladite ligne de transmission étant conçue pour adapter l'impédance de la diode à une impédance de l'antenne, le transpondeur passif, lorsqu'il reçoit une puissance RF à une première fréquence f₁, retransmettant une puissance RF à une fréquence harmonique fₕ,
**caractérisé en ce que**
la matière électroconductrice de l'antenne et de la ligne de transmission est une matière souple,
chaque partie électroconductrice (12a, 12b ; 22a, 22b ; 32a, 32b) de l'antenne se trouve sous la forme d'au moins un fil conducteur souple (14 ; 24 ; 34) présentant une première extrémité (15 ; 25 ; 35) et une seconde extrémité (16 ; 26 ; 36),
la diode (11 ; 21 ; 31 ; 53) étant reliée électriquement à la première extrémité (15 ; 25 ; 35) du fil conducteur souple.

2. Transpondeur passif selon la revendication 1, dans lequel chaque partie électroconductrice (32a, 32b) se trouve sous la forme d'un premier fil conducteur souple (34) présentant une première extrémité (35) et une seconde extrémité (36) et au moins un fil conducteur souple supplémentaire (38) relié électriquement à un point (39) du premier fil conducteur souple (34) situé entre la première extrémité (35) et la seconde extrémité (36) du premier fil conducteur souple (34).

3. Transpondeur passif selon l'une quelconque des revendications 1 à 2, dans lequel lesdits fils conducteurs souples sont des fils métalliques isolés.

4. Transpondeur passif selon l'une quelconque des revendications 1 à 3, dans lequel lesdits fils conducteurs souples (52) sont configurés de manière permettant leur intégration dans un tissu (50).

5. Transpondeur passif selon la revendication 4, dans lequel ladite ligne de transmission est un fil conducteur configuré de manière permettant son intégration dans le tissu (50).

6. Transpondeur passif selon l'une quelconque des revendications 1 à 5, dans lequel la fréquence harmonique fₕ est deux fois plus élevée que la première fréquence f₁.

7. Transpondeur passif selon l'une quelconque des revendications 1 à 6, dans lequel le transpondeur passif (10 ; 20 ; 41, 42) est entouré d'une matière diélectrique afin de réduire l'influence de l'environnement du transpondeur passif dans un champ proche de l'antenne.

8. Transpondeur passif selon la revendication 7, dans lequel ladite matière diélectrique est une matière biocompatible.

9. Tissu (40 ; 50) comportant au moins un transpondeur passif (41, 42 ; 51 ; 61) selon l'une quelconque des revendications 1 à 8.

10. Tissu selon la revendication 9, dans lequel ledit tissu est absorbant et adapté à des fins d'absorption de fluides.

11. Tissu selon l'une quelconque des revendications 9 ou 10, dans lequel ledit au moins un transpondeur passif (41, 42) est incorporé dans le tissu.

12. Tissu selon la revendication 11, dans lequel chaque transpondeur passif (41, 42) est agencé sur le bord (43) du tissu, en étant de préférence enfermé dans un ourlet ou une couture en bordure (44).

13. Tissu selon l'une quelconque des revendications 9 ou 10, dans lequel ledit au moins un transpondeur passif (51) est intégré dans le tissu et dans lequel la ligne de transmission et l'antenne de chaque transpondeur passif comprennent des fils conducteurs (52) agencés à l'intérieur du tissu.

14. Tissu selon l'une quelconque des revendications 9 à 13, dans lequel ledit transpondeur passif est revêtu d'une matière biocompatible (54) souple.

15. Tissu selon l'une quelconque des revendications 9 à 14, dans lequel ledit tissu est configuré sous la forme d'une compresse ou d'un produit pour tamponnement.
